# EUROPEAN PATENT SPECIFICATION

(11) **EP 3 812 296 B1**
(45) Date of publication and mention of the grant of the patent: **01.05.2024**
(21) Application number: 20382899.1
(22) Date of filing: 13.10.2020
(51) Int. Cl.: B65D 55/16, B65D 41/04, B65D 50/04

(54) **PLASTIC CAP CONNECTED TO A BOTTLENECK**
MIT EINEM FLASCHENHALS VERBUNDENE KUNSTSTOFFKAPPE
BOUCHON EN PLASTIQUE RELIÉ À UN GOULOT

(30) Priority: 14.10.2019 ES 201930907 U
(43) Date of publication of application: 28.04.2021
(73) Proprietor: ITC Packaging, S.L.U., 03440 Ibi (Alicante) (ES)
(72) Inventor: Galera Sánchez, Pedro, 03440 Ibi (ES)
(74) Representative: Ballester Cañizares, Rosalia

(56) References cited:
- WO-A1-2015/061834
- US-A- 3 468 444
- US-A- 4 753 358

## Description

### Field of the invention

This invention relates to a cap for a bottle that is connected to the neck of the same such that, during use, the cap is never separated from the same.

### State of the art

Most plastic bottle caps that currently exist are of two types: screw caps that can be separated from the bottle and caps that are connected by means of a hinge. Those of the first type should be legally eliminated from the market because they cause double waste (on the one hand, the bottle, and on the other, the cap). Those of the second type, however, although acceptable according to European Union regulations, cannot fully guarantee that the bottle is hermetically sealed once the seal has been removed from the cap, which could cause another type of problem, for example, the unwanted spillage of the liquid contained in the bottle.

Furthermore, it is important to note that, in order to meet sustainability goals, it is necessary to reduce plastic waste. This therefore makes it necessary that what has, until now, consisted of a double waste (cap and bottle) becomes a single waste, simplifying the task of collecting and recycling plastics. Therefore, a plastic cap is required that combines the hermetic characteristics of current screw caps with them being connected to the neck of the bottle during the use of said bottle, thus meeting European Union regulations.

Document US 4 753 358 A, a vial cap coupling device for flexibly coupling a vial and its sealing cap that includes: (a) a cylindrical retainer having an inner surface which forms a cavity for snugly receiving the sealing cap and firmly engaging an outer surface of the cap; in which the retainer also includes a larger flange that extends inwards from a top margin of the retainer inner surface which is smaller than the diameter of the outer surface of the sealing cap, forming a downward shelf which abuts against a contained sealing cap in the cavity to retain the cap therein; (b) a slide ring that has an inner diameter which is about the same as the outside diameter of the cylindrical part of the vial so that the slide ring can be slid up the cylindrical portion of the vial to the rim at the upper end of the cylindrical portion and so that the slide ring can rotate around the cylindrical portion; and (c) a hinge strap which, at its ends, is integrally connected to the retainer and the slide ring. However, this document does not describe any means of rotation between the two bodies of the cap, nor any safety seal. On the other hand, someone skilled in the art would not consider using a vial cap on a plastic bottle for medical use.

Document ES1218754U describes a cap for bottles comprising a circular base from whose perimeter a cylindrical wall extends perpendicularly to a circular open edge. Therefore, the height of the cylindrical wall is the distance between the perimeter of the circular base and the open edge. Similarly, the cylindrical wall has an inner face that is divided into a first section, comprising a screw thread located near to the cylindrical base, and a smooth second section located near to the open edge. As can be seen from the explanation below, once placed on the bottle, this second section acts as a seal and connects the rest of the cap to the bottleneck. However, according to the invention, the cap includes a cut line that runs along the cylindrical wall, and which delimits said first and second sections, for which purpose the cut line runs internally, in other words, it does not reach either the open edge or the perimeter of the circular base. The cut line is defined between a first and a second edge. The cut line can be considered to start at a first edge located in a first angular position with respect to an axis that passes through the centres of the circular base and the open edge, and ending at a second edge located in a second angular position so that the angular path of the cut line is greater than 360°, and wherein the height position of the second edge on the cylindrical wall is different from the height position of the first edge. Thus, in contrast to the caps from the state of the art, the cut line does not close on itself, in other words, it is never cut by itself, and the edges do not coincide. However, this document does not describe a helix cut of more than 360° around the seal so that when this cap is opened, there is always an area or zone of retention without the cut that prevents the cap from becoming separated since the lower area of the seal is retained by the bottleneck.

### Description of the invention

An object of this invention is a plastic cap connected to the neck of a bottle that is also normally plastic so that is perfectly hermetically sealed once the seal has been removed from the cap, in other words, in use, while said cap cannot become detached from the bottleneck, whereby achieving a reduction in contaminating plastic waste.

More specifically, the cap according with the appendant claim 1 prevents the cap from becoming separated from the bottle by means of a retention device for this purpose.

Thus, in the invention according to claim 1, the plastic cap of the type that screws on to a bottleneck and which is operable between a closed and an open position and which is characterised by a first body of the cap placed on the bottleneck and which comprises, in turn, a first inner lip and a second inner lip that define a space between them; a second body of the cap placed on the first body of the cap and joined to said first body of the cap by means of an inner lip that can be fitted into the space defined in the first body of the cap; an outer ring arranged under the bottleneck and which is connected to the second body of the cap by means of a connecting flange; and whereby, in the transition between the closed position and the open position of the cap, the second body rotates and moves upwards by one millimetre so that its inner lip fits into the space defined in the first body of the cap in such a way that said rotation, in turn, breaks a tamper-proof seal on the first body, leaving the whole formed by the first and second bodies connected to the outer seal.

Throughout the description and the claims, the word «comprises» and its variants are not intended to exclude other technical characteristics, additives, components or steps. For those skilled in the art, other objects, advantages, and characteristics of the invention will be derived partly from the invention and partly from its use. The following examples and drawings are provided by way of illustration and are not intended to restrict this invention.

### Brief description of the drawings

Below is a very brief description of a series of drawings which help to better understand the invention, and which expressly relate to one embodiment of said invention, which is illustrated as a non-limiting example of it.
FIG.1 shows a perspective view of a first practical embodiment of the plastic cap (1) connected to a bottleneck, which is the object of this invention.
FIG.2 shows an isolated example of the first body (1.2) of the cap (1) in the practical embodiment shown in FIG.1
FIG.3 shows an isolated view of the second body (1.3) of the cap (1) together with the ring (1.4) in the practical embodiment shown in FIG.1

The references used in the figures are as follows:
1. Cap in its first practical embodiment
1.1. Bottleneck in the first practical embodiment
1.2. First body of the cap
1.2.1. First internal lip
1.2.2. Second internal lip
1.2.3. Inner space between the first and second inner ring
1.2.4. Tamper-proof seal
1.3. Second body of the cap
1.4. Outer ring
1.4.1. Connecting flange

### Detailed explanation of one embodiment of the invention and examples

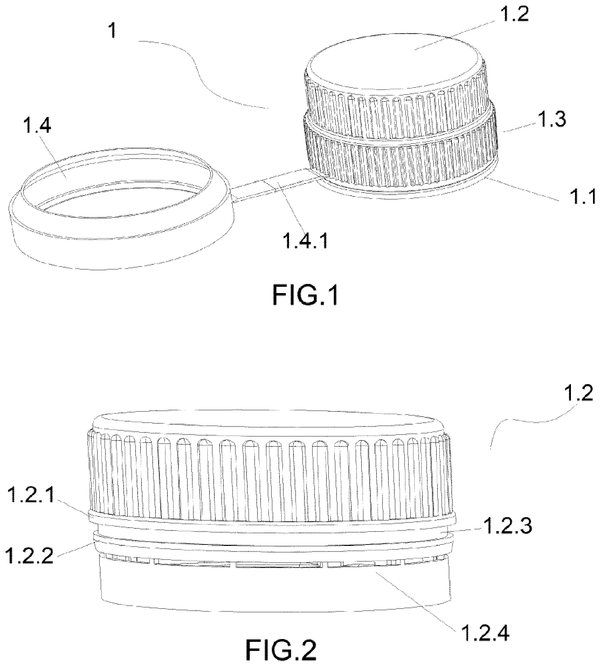

In a practical embodiment shown in figures 1 to 3 a cap 1 is shown which comprises a first body of the cap 1.2 and a second body of the cap 1.3 which are joined together and mounted on the bottleneck 1.1. The cap 1 is completed with an outer ring 1.4 which, in its assembly position, is fixed underneath the bottleneck 1.1 and is connected to the second body of the cap 1.3 by means of a connecting flange 1.4.1. Thus, with the cap 1 closed, the ring 1.4 is positioned below the lower crown of the bottleneck 1.1, with the first and second bodies of the cap (1.2 and 1.3) joined together and located on said bottleneck 1.1.

The first body of the cap 1.2, as shown in figure 2, in its use position is screwed on to the bottleneck 1.1 above the crown, in a manner known to one skilled in the art, and has the particularity of comprising, at the same time, a first inner lip 1.2.1 and a second inner lip 1.2.2 which delimit a space 1.2.3 between them. Furthermore, the first body of the cap 1.2 comprises a tamper-proof seal 1.2.4, to act as the closure of the bottle.

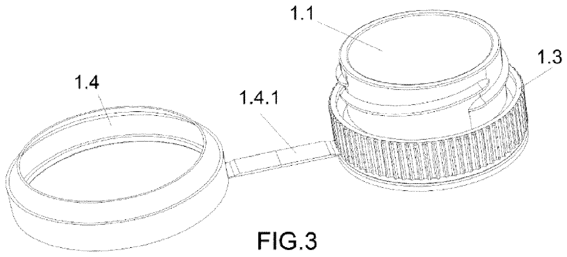

The second body of the cap 1.3, which is solidly connected to the first body 1.2 and arranged over the same, is located on the first body of the cap 1.2, without being in direct contact with the bottleneck 1.1, since this is the function of the first body 1.2, as can be better appreciated in figure 3. This configuration ensures that, when a user rotates the second body 1.3 of the cap 1 and at the same time slides said second body approximately 1mm upwards, this rotation and movement causes an inner lip of the second body 1.3 to become wedged in the space 1.2.3 of the first body 1.2. Thanks to this rotation and displacement movement, the set formed by the first body 1.2 and the second body 1.3 become joined together, at the same time that the rotation of the set formed by the first body 1.2 and the second body of the cap 1.3 breaks the tamper-proof sea 1.2.4, opening the bottle.

By means of the above movements, the bottle is opened, while the second body 1.3 is joined to the first body 1.2 since an inner lip of the second body 1.3 is wedged into the space 1.2.3 of the first body. However, the second body 1.3 is also joined by means of the flange 1.4.1 with the outer ring 1.4 which is fixed underneath the crown of the bottleneck 1.1, so that the whole formed by the first and second bodies (1.2 and 1.3) will never become loose and may be screwed and unscrewed from the bottle without any problem.

## Claims

1. A bottle comprising:
a bottleneck (1.1) comprising a lower crown; and
a plastic cap (1) which comprises a first body (1.2) and a second body (1.3), wherein the first body (1.2) and the second body (1.3) are joined together and mounted on the bottleneck (1.1);
wherein when the plastic cap (1) is closed:
the plastic cap (1) comprises an outer ring (1.4) which is fixed underneath the bottleneck (1.1) and is connected to the second body (1.3) by means of a connecting flange (1.4.1) in such a way that the outer ring (1.4) is positioned below the lower crown of the bottleneck (1.1) with the first body (1.2) and the second body (1.3) of the cap joined together and located on the bottleneck (1.1) when the plastic cap (1) is closed; and
the first body (1.2) of the plastic cap (1) is screwed onto the bottleneck (1.1) above its lower crown and comprises:
a first inner lip (1.2.1) and a second inner lip (1.2.2) which delimit a space (1.2.3) between them, and
a tamper-proof seal (1.2.4), to act as the closure of the bottle;
and wherein the second body (1.3) of the cap (1) is solidly connected to the first body (1.2) and arranged over the same, without being in direct contact with the bottleneck (1.1);
the bottle being configured so that
when a user rotates the second body (1.3) of the cap (1) and, at the same time, the user slides the second body (1.3) approximately 1 mm upwards, this rotation and movement causes an inner lip of the second body (1.3) to become wedged in the space (1.2.3) of the first body (1.2); and
with this rotation and displacement movement, the set formed by the first body (1.2) and the second body (1.3) become joined together, at the same time that the rotation of the set formed by the first body (1.2) and the second body (1.3) of the cap (1) break the tamper-proof seal (1.2.4), opening the bottle; and
when the bottle is opened, the second body (1.3) is joined to the first body (1.2) since the inner lip of the second body (1.3) is wedged into the space (1.2.3) of the first body (1.2) of the cap (1) whereas the second body (1.3) is also joined by means of the flange (1.4.1) with the outer ring (1.4) which is fixed underneath the lower crown of the bottleneck (1.1).

## Patentansprüche

1. Flasche, umfassend:
einen Flaschenhals (1.1), der eine untere Krone umfasst; und
eine Kunststoffkappe (1), die einen ersten Körper (1.2) und einen zweiten Körper (1.3) umfasst, wobei der erste Körper (1.2) und der zweite Körper (1.3) miteinander verbunden und auf dem Flaschenhals (1.1) angebracht sind;
wobei, wenn die Kunststoffkappe (1) geschlossen ist:
die Kunststoffkappe (1) einen Außenring (1.4) umfasst, der unterhalb des Flaschenhalses (1.1) befestigt und mit dem zweiten Körper (1.3) mittels eines Verbindungsflansches (1.4.1) so verbunden ist, dass der Außenring (1.4) unterhalb der unteren Krone des Flaschenhalses (1.1) positioniert ist, wobei der erste Körper (1.2) und der zweite Körper (1.3) der Kappe miteinander verbunden sind und auf dem Flaschenhals (1.1) liegen, wenn die Kunststoffkappe (1) geschlossen ist; und
der erste Körper (1.2) der Kunststoffkappe (1) auf den Flaschenhals (1.1) oberhalb seiner unteren Krone geschraubt ist und Folgendes umfasst:
eine erste innere Lippe (1.2.1) und eine zweite innere Lippe (1.2.2), die einen Zwischenraum (1.2.3) zwischen sich begrenzen und
eine manipulationssichere Versiegelung (1.2.4), die als Verschluss
der Flasche dient;
und wobei der zweite Körper (1.3) der Kappe (1) mit dem ersten Körper (1.2) fest verbunden und über diesem angeordnet ist, ohne in direktem Kontakt mit dem Flaschenhals (1.1) zu stehen;
die Flasche dazu konfiguriert ist, dass, wenn ein Benutzer den zweiten Körper (1.3) der Kappe (1) dreht und gleichzeitig den zweiten Körper (1.3) etwa 1 mm nach oben schiebt, diese Drehung und Bewegung bewirkt, dass eine innere Lippe des zweiten Körpers (1.3) in dem Raum (1.2.3) des ersten Körpers (1.2) verkeilt wird; und
bei dieser Dreh- und Verschiebebewegung verbindet sich der aus dem ersten Körper (1.2) und dem zweiten Körper (1.3) gebildete Satz miteinander, während die Drehung des aus dem ersten Körper (1.2) und dem zweiten Körper (1.3) gebildeten Satzes der Kappe (1) die manipulationssichere Versiegelung (1.2.4) bricht und die Flasche öffnet; und
wenn die Flasche geöffnet wird, ist der zweite Körper (1.3) mit dem ersten Körper (1.2) verbunden, da die innere Lippe des zweiten Körpers (1.3) in den Zwischenraum (1.2.3) des ersten Körpers (1.2) der Kappe (1) eingeklemmt ist, während der zweite Körper (1.3) auch über den Flansch (1.4.1) mit dem äußeren Ring (1.4) verbunden ist, der unterhalb der unteren Krone des Flaschenhalses (1.1) befestigt ist.

## Revendications

1. Bouteille comprenant :
un goulot (1.1) comprenant une couronne inférieure ; et
un bouchon en plastique (1) qui comprend un premier corps (1.2) et un second corps (1.3), dans laquelle le premier corps (1.2) et le second corps (1.3) sont assemblés et montés sur le goulot (1.1) ;
dans laquelle lorsque le bouchon en plastique (1) est fermé :
le bouchon en plastique (1) comprend un anneau extérieur (1.4) qui est fixé sous le goulot (1.1) et est relié au second corps (1.3) au moyen d'une bride de liaison (1.4.1) de telle sorte que l'anneau extérieur (1.4) est positionné en dessous de la couronne inférieure du goulot (1.1), le premier corps (1.2) et le second corps (1.3) du bouchon étant assemblés et situés sur le goulot (1.1) lorsque le bouchon en plastique (1) est fermé ; et
le premier corps (1.2) du bouchon en plastique (1) est vissé sur le goulot (1.1) au-dessus de sa couronne inférieure et comprend :
une première lèvre intérieure (1.2.1) et une seconde lèvre intérieure (1.2.2) qui délimitent un espace (1.2.3) entre elles, et
un sceau inviolable (1.2.4), faisant office de fermeture de la bouteille ;
et dans laquelle le second corps (1.3) du bouchon (1) est solidement relié au premier corps (1.2) et agencé sur celui-ci, sans être en contact direct avec le goulot (1.1);
la bouteille étant conçue de sorte que lorsqu'un utilisateur fait tourner le second corps (1.3) du bouchon (1) et, en même temps, l'utilisateur fait glisser le second corps (1.3) d'environ 1 mm vers le haut, cette rotation et ce mouvement provoquent le coincement d'une lèvre intérieure du second corps (1.3) dans l'espace (1.2.3) du premier corps (1.2) ; et
avec cette rotation et ce mouvement de déplacement, l'ensemble formé par le premier corps (1.2) et le second corps (1.3) devient assemblé, en même temps que la rotation de l'ensemble formé par le premier corps (1.2) et le second corps (1.3) du bouchon (1) brise le sceau inviolable (1.2.4), ouvrant la bouteille ; et
lorsque la bouteille est ouverte, le second corps (1.3) est assemblé au premier corps (1.2) puisque la lèvre intérieure du second corps (1.3) est coincée dans l'espace (1.2.3) du premier corps (1.2) du bouchon (1) alors que le second corps (1.3) est également assemblé au moyen de la bride (1.4.1) à la bague extérieure (1.4) qui est fixée sous la couronne inférieure du goulot (1.1).
